# EUROPEAN PATENT SPECIFICATION

(11) **EP 1 916 034 B1**
(45) Date of publication and mention of the grant of the patent: **29.07.2009**
(21) Application number: 07104753.4
(22) Date of filing: 23.03.2007
(51) Int. Cl.: B05B 3/06, B05B 15/06, H05K 5/00, H05K 7/20, B05B 3/10

(54) **A portable apparatus for cooling external areas**
Tragbare Vorrichtung zum Kühlen von Außenbereichen
Appareil portable pour refroidir les zones externes

(30) Priority: 26.10.2006 IT RE20060126
(43) Date of publication of application: 30.04.2008
(73) Proprietor: Annovi Reverberi S.p.A., 41100 Modena (IT)
(72) Inventor: Reverberi, Stefano, 41100 Modena (IT)
(74) Representative: Corradini, Corrado

(56) References cited:
- EP-A- 0 503 345
- EP-A- 1 174 195
- FR-A- 2 192 466
- FR-A- 2 497 692
- FR-A1- 2 387 691
- US-A- 4 483 486
- US-A- 5 667 141
- US-A- 6 158 673
- US-A1- 2003 193 780
- US-A1- 2004 022 028

## Description

The invention relates to a portable apparatus for cooling external areas.

In particular, the invention relates to an apparatus able to lower a temperature in an external ambience within a determined limited range, for example a garden or a terrace or the like.

As is known, it is more comfortable to perform activities outside or in semi-open environments if the temperature is within a limited range, typically between 18 and 26 °C.

To improve comfort levels in outside environments where the temperature is high, the prior art includes ventilators which move the surrounding air at high speed and thus mitigate the sensation of discomfort which is present at high temperatures.

Although these ventilators are easy to use, they bring about an improvement in degree of comfort which reaches only those directly invested by the jet of air produced by the ventilator, and for some people the breeze created and directed at them is intolerable.

In an attempt to resolve these drawbacks, air atomizer groups have been developed which spray water at high pressure into the external ambience where the air needs cooling; these lower the temperature of the surrounding environment and thus contribute to improving the sensation of well-being for those who are performing activities in the concerned area.

Atomization consists in spraying water in minute droplets, which droplets evaporate in the air, removing heat therefrom, also known as latent heat of evaporation.

Unfortunately the air atomizers in the prior art are very complex and mostly destined for professional use, and are therefore not very suitable for external use in small areas, such as for example private gardens or open terraces.

There is therefore a strongly felt need to have available an apparatus for cooling outside environments, which apparatus should be compact and easily transportable by a person, and be ready to use and extremely versatile; and this in a solution which is constructionally simple and rational and relatively inexpensive.

The prior art comprises a portable aerosol generator as described in FR-2387691-A1 and a pressure washer as described in EP-0503345-A1.

The aim of the present invention is to provide an apparatus for cooling external environments which has structural and functional characteristics which satisfy the above-described requirements and which at the same time obviate the drawbacks mentioned with reference to the prior art.

The aim is attained by the apparatus for cooling external environments of claim 1 of the appended claims.

The dependent claims delineate preferred and particularly advantageous embodiments of the apparatus for cooling outside areas of the invention.

Further characteristics and advantages of the invention will emerge from a reading of the description provided purely by way of non-limiting example, with the aid of the accompanying figures of the drawings, in which:
- Figures 1 to 4 respectively are schematic views of an apparatus for cooling external areas, in various embodiments of the present invention;
- Figures 1A to 4A are plan views of the arrangement of the atomizing nozzles, respectively for the apparatus of figures 1 to 4.

With reference to the figures of the drawings, 10, 20, 30 and 40 denote four apparatuses for cooling outside environments, which for reasons of simplicity will be termed coolers, in four different embodiments of the present invention. Also for reasons of simplicity, in the following description the elements which are common to the coolers shall be denoted using the same numerical references.

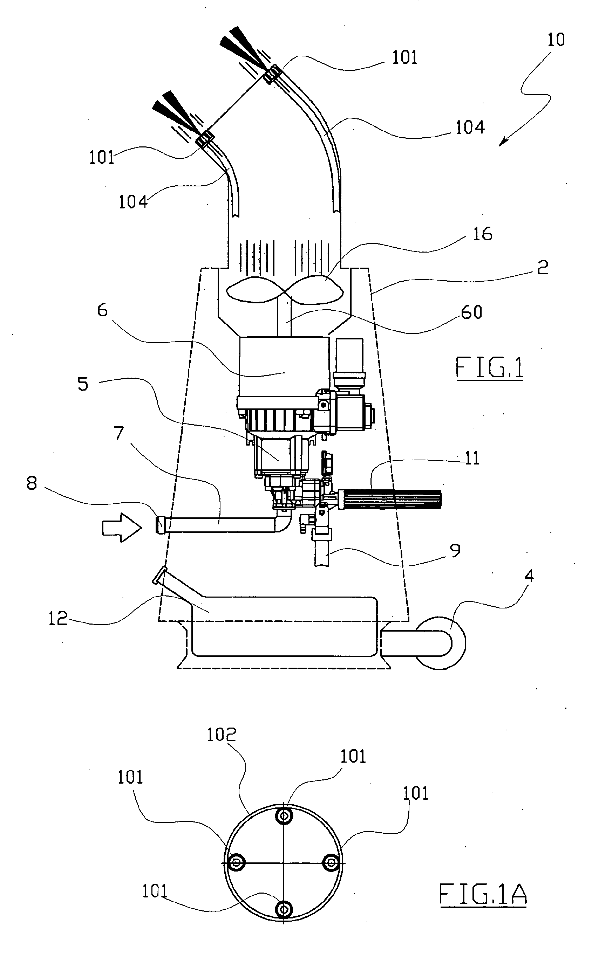

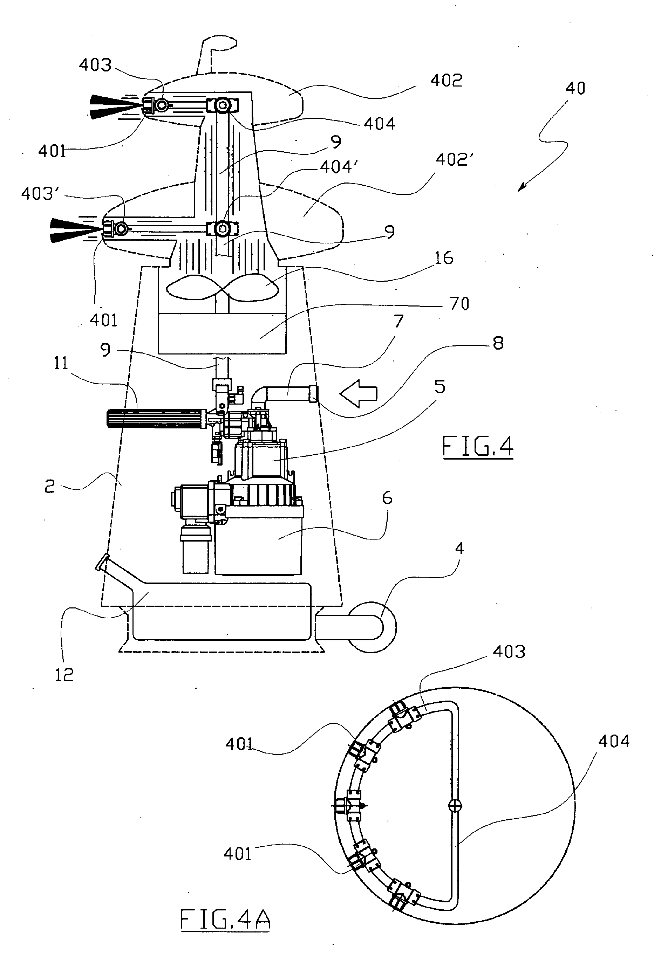

In the present invention, each cooler 10, 20, 30 and 40 comprises an external casing 2 provided with a handle 3, not visible in figures 1 and 4, and a pair of wheels 4 for easy transport of the cooler on the ground.

An electric pump 5 is housed inside the casing 2, being a piston pump powered by an electric motor 6.

The electric pump 5 is connected in inlet to a conduit 7 which leads to a sleeve 8 located on the outside of the casing 2, which sleeve 8 can be connected at place of use of the cooler to a pipeline connected to the water supply, and is connected in delivery to a conduit 9 which sends the pressurised water to a plurality of nozzles from which the atomised water exits, as will be more fully described herein below.

In order to reach a water pressure at the nozzle of about 30-40 bar with the option of reducing this pressure if necessary, a common pressure regulator is used, associated to the electric pump 5 and provided with a regulating handle 11 which exits laterally of the casing 2 in such a way as to be accessible to the user.

The pressure regulator acts on the water delivery to be sent on to the nozzles by by-passing a part of the water being delivered to the nozzles.

In order for the cooler to be rendered independent of the external water source, a housing for a water tank 12 (about 15 litres in the illustrated embodiment) is afforded internally of the casing 2, which contains water and is located near the bottom of the casing 2.

The tank 12 can be extractable or fixed.

With the water tank 12, instead of connecting the conduit 7 to the water source, it is connected directly to the tank 12.

To reduce the consumption of water and should it be necessary to reduce the cooling power of the cooler, the cooler can be equipped with an intermittent atomising system comprising a memory card connected to the electric pump activating line and programmed such as to operate the pump for a certain time and then switch it off for a further programmed time.

In the first embodiment, illustrated in figure 1, the nozzles, denoted by 101, four in number (figure 1A), are fixed and located on the upper part of the casing 2.

The nozzles 101 are arranged on a circumference 102, distanced by 90° from one another and pointing upwards. In the illustrated embodiment the plane of the circumference 102 exhibits an inclination of about 45° with respect to the vertical.

The pressurised water delivery to the electric pump 5 passes through the conduit 9, to which a manifold is connected (not illustrated) which shares out the water to the four nozzles 101 through a conduit 104 for each of them.

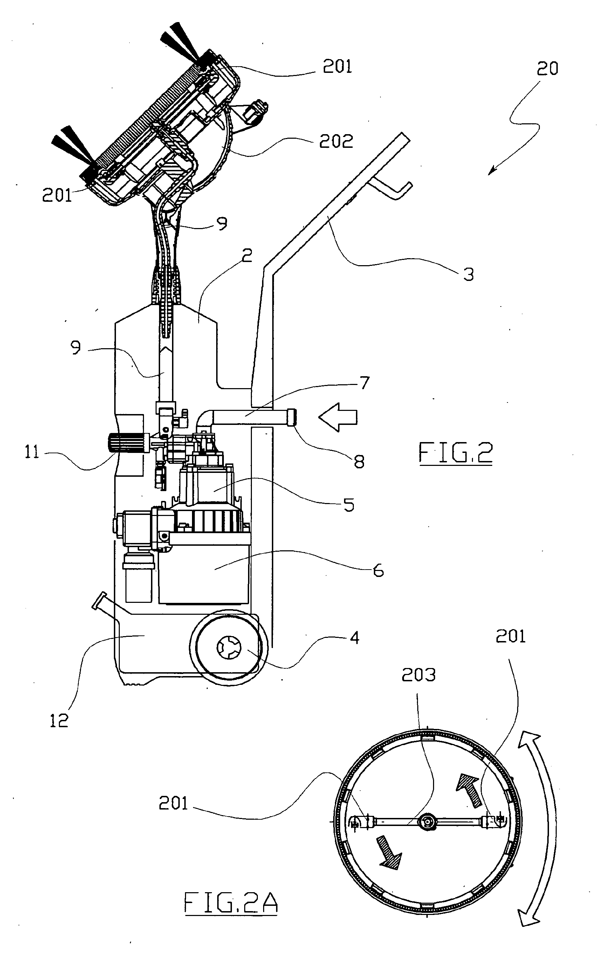

In the second embodiment of figure 2, the nozzles, denoted by 201, two in number (figure 2A) are fixed to ends of a rod 203 which is pivoted centrally and is free to rotate about an axis arranged perpendicular to the rod 203 itself.

In the illustrated embodiment, the rod 203 is formed by a rigid conduit connected centrally and rotatably with respect to the delivery conduit 9.

The pressurised water arrives from the conduit 9 centrally of the conduit 203, which bears a nozzle 201 on each of the two ends.

In the example, the group of the two nozzles 201 rotates internally of a spray head 202.

The total arc of rotation of the spray head 202 is about 90° (from -45° to +45° with respect to the vertical).

The two nozzles 201 are advantageously reciprocally arranged such as to spray the atomised water in two opposite directions, such as to set the rod/conduit 203 in rotation about the centre thereof.

The rotation is guaranteed by the force exerted by the exiting of the pressurised and atomised water.

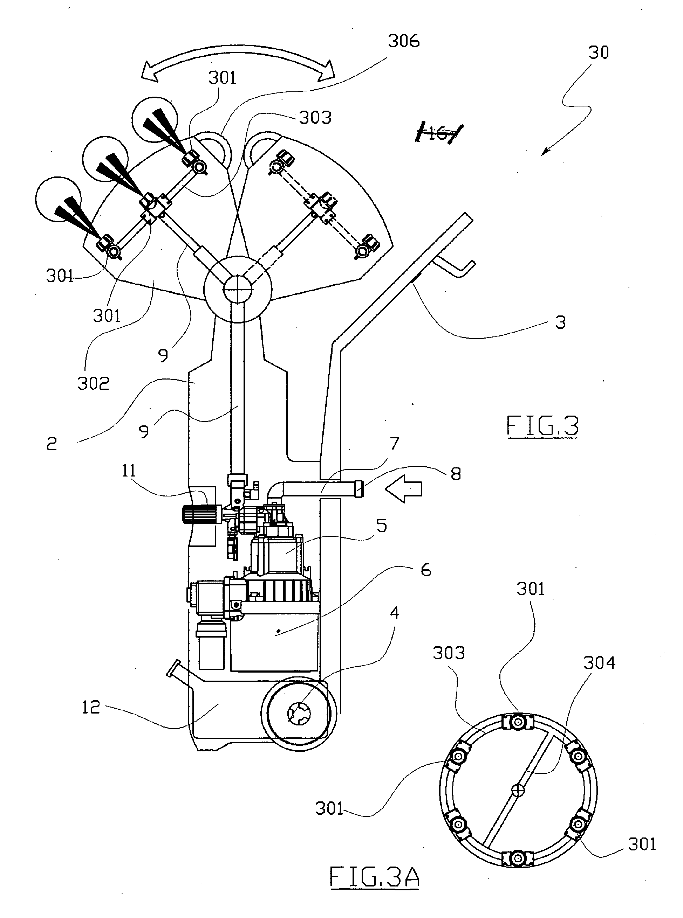

In the third illustrated embodiment of figure 3, the nozzles, denoted by 301, six in number (figure 3A), are associated to a spray head 302 which is rotatably fixed to the upper part of the casing 2 and provided with a gripping handle 306.

The complete arc of rotation of the spray head 302 is about 90° (from -45°to +45°with respect to the vertical).

In this way, by changing the orientation of the spray head 302 atomising direction can be changed without any need to rotate the whole cooler 30.

The nozzles 301 are arranged on a circumferential manifold 303, are equidistanced and are oriented such as to atomise the water in a perpendicular direction to the plane lying on the circumferential manifold 303.

The circumferential manifold 303 is connected to a diametral conduit 304 which passes through the centre and which is centrally connected with the delivery conduit 9 from which the pressurised water arrives to be atomised by the nozzles 301.

The water arrives from the delivery conduit 9, reaches the diametral conduit 304 and thence goes to the circumferential manifold 303 in order to exit from the nozzles 301.

In a fourth embodiment of the invention, illustrated in figure 4, the nozzles, denoted by 401, are five in number (figure 4A) and are associated respectively to a first and a second spray head 402, 402' arranged one above another at a predetermined distance, both being fixed superiorly of the casing 2.

In the illustrated embodiment, the two spray heads 402, 402' are fixed, although they could instead be mounted rotatably.

In particular, the nozzles 401 are arranged reciprocally equidistanced on a semi-circumferential manifold 403, 403', which is associated to each head 402, 402'.

The nozzles are arranged in such a way as to spray the atomised water radially, i.e. parallel to the lie plane of the semi-circumferential manifold 403, 403'.

Each semicircumferential manifold 403, 403' is connected to a diametral conduit 404, 404' which passes through the centre and which is centrally connected to the delivery conduit 9 from which pressurised water arrives in order to be atomised and to exit from the nozzles 401.

In the illustrated embodiment, both the nozzles 401 of the first head 402 and those of the second head 402' spray from the same side in a horizontal direction.

Naturally any other orientation could be used.

In order to improve the diffusion of the atomised water droplets exiting from the nozzles, the cooler of the present invention can be provided with one or more fans 16; in the drawings the fan is represented only in figures 1 and 4.

The fan 16 of the cooler 10 of figure 1 is set in rotation directly by the drive shaft 60 of the motor 6 of the electric pump 5, while the fan 16 of the cooler 40 of figure 4 is set in rotation by a supplementary motor 70, also housed inside the casing 2.

The fans 16 are located on the back of the nozzles so that the air current generated thereby strikes the jet of atomised water exiting therefrom.

Naturally the fan can also be housed internally of the mobile head 302 of the cooler 30 of figure 3 and can be equipped with a dedicated motor.

In the present invention, the above-described nozzles exhibit a diameter comprised between 0.15 ad 0.30 mm, preferably about 0.20 mm, and are conformed such as to guarantee an optimal atomisation. In particular, the spray cone for each nozzle is about 30°.

The pump 5 delivers about from 0.3 to 2.1 litres/min., preferably about 1.5 litres/min., which is sent to the nozzles. However with the pressure regulator, the effective delivery of the water arriving at the nozzles could be less, to compensate for the number of nozzles. For example, the delivery can drop as low as about 0.8-0.31 litres/min.

Naturally each cooler is provided with an electric cable for connection to the electricity supply. Alternatively or additionally, an electric battery can be used, not illustrated, to provide the necessary energy in the absence of an electricity source *in loco.* The battery is also housed in the casing 2.

As can be appreciated from the foregoing description, the apparatus for cooling external areas of the present invention is sufficient to satisfy the requirements and to obviate the drawbacks outlined in the introductory section of the present description with reference to the prior art.

Indeed, the apparatus for cooling external areas of the present invention enables external areas to be cooled with extreme simplicity, its being sufficient to connect the cooler to the water the electricity supplies normally available.

Obviously a skilled person in the field might bring numerous modifications and variations to the apparatus for cooling external areas as described above, with the aim of satisfying contingent and specific needs, all of which modifications fall within the ambit of protection sought for the invention as defined in the claims that follow.

## Claims

1. A portable apparatus for cooling external areas, comprising a pump (5) which comprises an inlet conduit (7) destined to be connected to a water supply source, and a delivery conduit (9) connected to at least a nozzle (101, 201, 301, 401) for atomising the water, a motor (6) powering the pump (5) and a pressure regulator (11) for varying the water pressure delivered to the at least a nozzle (101, 201, 301, 401), **characterised in that** the pump (5), the inlet conduit (7) and the delivery conduit (9), the pressure regulator (11) and the motor (6) are all housed in a casing (2) provided with a handle (3) and wheels (4), the casing (2) being conformed in such a way as to be transportable by a single person.

2. The apparatus of claim 1, further comprising an electric battery connected to the motor (6) for supplying sufficient energy for autonomously powering the pump (6).

3. The apparatus of claim 1, wherein the at least a nozzle (201, 301) is associated to a spray head (202, 302) which is rotatably mobile and mounted above the casing (2) in order to be orientable as required.

4. The apparatus of claim 3, wherein the spray head (202, 302) is rotatable along an arc of 90° comprised between -45° and +45° with respect to the vertical.

5. The apparatus of claim 4, wherein the spray head (302) comprises a gripping handle (306).

6. The apparatus of claim 1, comprising at least a fan (16) for blowing air, positioned such as to blow air from behind the at least a nozzle in a water-spraying direction.

7. The apparatus of claim 6, wherein the fan (16) is activated by a shaft (60) of the motor (6) powering the pump (5).

8. The apparatus of claim 6, wherein the fan (16) is activated by a supplementary motor (70) housed in the casing (2).

9. The apparatus of claim 1, further comprising an extractable tank (12) housed internally of the casing (2) and destined to contain water, the tank (12) being directly connected to the inlet conduit (7) of the pump (5).

10. The apparatus of claim 1, comprising two atomising nozzles (201) connected to ends of a same water conduit (203) rotatably mounted at a centre thereof to a rotation axis perpendicular thereto, the nozzles (201) being arranged in such a way as to set the conduit (203) in rotation about the certer thereof when spraying the atomised water.

11. The apparatus of claim 1, comprising six atomising nozzles (301) arranged equidistantly and being circumferentially connected to a same circular water conduit (303), the nozzles (301) being arranged in such a way as to spraying atomised water in a perpendicular direction to a plane on which the circular conduit (303) lies.

12. The apparatus of claim 1, comprising five atomising nozzles (401) arranged equidistantly and connected to a conduit (403) having a semi-circumferential conformation, the nozzles (401) being arranged in such a way as to spray the atomised water in a radial direction.

13. The apparatus of claim 12, comprising two spray heads (402, 402') arranged one above another and fixed to the casing (2), one of said semi-circumferential conduit (403) being associated to each of the heads (402, 402').

14. The apparatus of claim 1, comprising a programmed system associated to the pump (5) and destined to automatically interrupt the electrical connection to the pump intermittently, in order to obtain an intermittent atomisation.

## Patentansprüche

1. Ein tragbares Gerät zur Kühlung von Außenbereichen, einschließlich einer Pumpe (5) mit einer Einlassleitung (7), die an einen Wasseranschluss angeschlossen wird, und einer Zuführleitung (9), die an wenigstens eine Düse (101, 201, 301, 401) zur Zerstäubung des Wassers angeschlossen ist, einem Motor (6), der die Pumpe (5) antreibt, und einem Druckregler (11) zur Regulierung des Wasserdrucks, der zu wenigstens einer Düse (101, 201, 301, 401) geleitet wird, **dadurch gekennzeichnet, dass** die Pumpe (5), die Einlassleitung (7) und die Zuführleitung (9), der Druckregler (11) und der Motor (6) in ein Gehäuse (2) mit einem Griff (3) und Rädern (4) eingeschlossen sind, wobei das Gehäuse (2) so gestaltet ist, dass es von nur einer Person getragen werden kann.

2. Ein Gerät nach Patentanspruch 1, einschließlich einer mit dem Motor (6) verbundenen elektrischen Batterie, die ausreichend Energie liefert, um die Pumpe (6) selbständig zu versorgen.

3. Ein Gerät nach Patentanspruch 1, wobei wenigstens eine Düse (201, 301) einem drehbaren Sprühkopf (202, 302) zugeordnet ist, der so auf dem Gehäuse (2) angebracht ist, dass er sich wie gewünscht ausrichten lässt.

4. Ein Gerät nach Patentanspruch 3, wobei sich der Sprühkopf (202, 302) in einem Bogen von 90° drehen lässt, und zwar in einem Bereich von -45° bis +45° zur Senkrechten.

5. Ein Gerät nach Patentanspruch 4, wobei der Sprühkopf (302) einen Handgriff (306) enthält.

6. Ein Gerät nach Patentanspruch 1, einschließlich wenigstens eines Gebläses (16) zum Blasen von Luft, das so angeordnet ist, dass es Luft von hinter der wenigstens einen Düse in Wasserstrahlrichtung bläst.

7. Ein Gerät nach Patentanspruch 6, wobei das Gebläse (16) von einer Welle (60) des Motors (6) betätigt wird, der die Pumpe (5) antreibt.

8. Ein Gerät nach Patentanspruch 6, wobei das Gebläse (16) von einem zusätzlichen Motor (70) angetrieben wird, der in das Gehäuse (2) eingeschlossen ist.

9. Ein Gerät nach Patentanspruch 1, einschließlich eines abnehmbaren Tanks (12), der in das Gehäuse (2) eingeschlossen ist und der Wasser enthält, wobei der Tank (12) direkt mit der Einlassleitung (7) der Pumpe (5) verbunden ist.

10. Ein Gerät nach Patentanspruch 1, einschließlich zweier Zerstäubungsdüsen (201), die an die Enden einer gleichen Wasserleitung (203) angeschlossen sind, die in der Mitte des Gerätes drehbar an einer senkrecht dazu stehenden Rotationsachse installiert ist, wobei die Düsen (201) so angeordnet sind, dass sie die Leitung (203) beim Sprühen des zerstäubten Wassers zum Rotieren um ihre eigene Mitte bringen.

11. Ein Gerät nach Patentanspruch 1, einschließlich sechs Zerstäubungsdüsen (301), die in gleichem Abstand zueinander angeordnet und kreisförmig an eine ringförmige Wasserleitung (303) angeschlossen sind, wobei die Düsen (301) so angeordnet sind, dass sie das zerstäubte Wasser senkrecht zu der Ebene sprühen, auf der die Ringleitung (303) liegt.

12. Ein Gerät nach Patentanspruch 1, einschließlich fünf Zerstäubungsdüsen (401), die in gleichem Abstand zueinander angeordnet und an eine halbkreisförmige Leitung (403) angeschlossen sind, wobei die Düsen (401) so angeordnet sind, dass sie das zerstäubte Wasser in eine radiale Richtung sprühen.

13. Ein Gerät nach Patentanspruch 12 mit zwei übereinander angeordneten und an das Gehäuse (2) angeschlossenen Sprühköpfen (402, 402'), wobei jedem der Köpfe (402, 402') eine der halbkreisförmigen Leitungen (403) zugeordnet ist.

14. Ein Gerät nach Patentanspruch 1 mit einem der Pumpe (5) zugeordneten programmierten System, das die elektrische Verbindung zur Pumpe automatisch stoßweise unterbricht, um eine in Abständen auftretende Zerstäubung zu erhalten.

## Revendications

1. Un appareil portatif pour le refroidissement de zones externes, comprenant une pompe (5) qui inclue un conduit d'entrée (7), destiné à être raccordé à une source d'alimentation en eau et un conduit d'alimentation (9) raccordé à au moins une buse (101, 201, 301, 401) pour atomiser l'eau, un moteur (6) actionnant la pompe (5) et un régulateur de pression (11) pour faire varier la pression de l'eau fournie à la buse (101, 201, 301, 401), **caractérisé par le fait que** la pompe (5), le conduit d'entrée (7) et le conduit d'alimentation (9), le régulateur de pression (11) et le moteur (6) sont logés dans un carter (2) doté d'une poignée (3) et de roulettes (4), le carter (2) étant formé de sorte qu'il peut être transporté par une seule personne.

2. Appareil selon la revendication 1, comprenant également une batterie électrique raccordée au moteur (6) pour fournir l'énergie suffisante pour un actionnement autonome de la pompe (6).

3. Appareil selon la revendication 1, où la buse (201, 301) est associée à une tête de pulvérisation (202, 302) mobile en rotation et montée au-dessus du carter (2) afin d'être orientée selon les besoins.

4. Appareil selon la revendication 3, où la tête de pulvérisation (202, 302) peut pivoter le long d'un arc de 90° compris entre -45° et +45° par rapport à la verticale.

5. Appareil selon la revendication 4, où la tête de pulvérisation (302) comprend une poignée de saisie (306).

6. Appareil selon la revendication 1, comprenant au moins un ventilateur (16) pour souffler l'air, placé de sorte à souffler l'air de derrière la buse dans la direction de projection de l'eau.

7. Appareil selon la revendication 6, où le ventilateur (16) est activé par un arbre (60) du moteur (6) actionnant la pompe (5).

8. Appareil selon la revendication 6, où le ventilateur (16) est activé par un moteur supplémentaire (70) logé dans le carter (2).

9. Appareil selon la revendication 1, comprenant également un réservoir extractible (12) logé à l'intérieur du carter (2) et destiné à contenir de l'eau, ledit réservoir étant directement raccordé au conduit d'entrée (7) de la pompe (5).

10. Appareil selon la revendication 1, comprenant deux buses d'atomisation (201) raccordées aux extrémités d'un même conduit d'eau (203) montées de manière rotative au centre de celui-ci sur un axe de rotation perpendiculaire à celui-ci, les buses (201) étant disposées de sorte à mettre le conduit (203) en rotation autour du centre de celui-ci lors de la pulvérisation de l'eau atomisée.

11. Appareil selon la revendication 1, comprenant six buses d'atomisation (301) disposées de manière équidistante et raccordées sur la circonférence d'un même conduit d'eau (303), les buses (301) étant disposées de sorte à pulvériser l'eau atomisée dans une direction perpendiculaire à un plan sur lequel se trouve le conduit circulaire (303).

12. Appareil selon la revendication 1, comprenant cinq buses d'atomisation (401) disposées de manière équidistante et raccordées à un conduit (403) ayant une forme semi-circonférentielle, les buses (401) étant disposées de sorte à pulvériser l'eau atomisée dans une direction radiale.

13. Appareil selon la revendication 12, comprenant deux têtes de pulvérisation (402, 402') disposées l'une au-dessus de l'autre et fixées au carter (2), un desdits conduits semi-circonférentiels (403) étant associé à chacune des têtes (402, 402').

14. Appareil selon la revendication 1, comprenant un système programmé associé à la pompe (5) et destiné à interrompre automatiquement la connexion électrique à la pompe de façon intermittente afin d'obtenir une atomisation intermittente.
